# FASCICULE DE BREVET EUROPEEN

(11) **EP 2 401 509 B1**
(45) Date de publication et mention de la délivrance du brevet: **03.04.2019**
(21) Numéro de dépôt: 10706210.1
(22) Date de dépôt: 25.02.2010
(51) Int. Cl.: F04D 29/32, F04D 29/36, F02K 3/06

(54) **AUBES DE SOUFFLANTE A CALAGE CYCLIQUE**
GEBLÄSESCHAUFELN MIT ZYKLISCHER EINSTELLUNG
FAN BLADES WITH CYCLIC SETTING

(30) Priorité: 27.02.2009 FR 0951269; 27.02.2009 FR 0951270
(43) Date de publication de la demande: 04.01.2012
(73) Titulaire: Safran Aircraft Engines, 75015 Paris (FR)
(72) Inventeur: BOUILLER, Philippe, Pierre, Vincent, F-77210 Samoreau (FR); ROUSSELIN, Stéphane, F-77850 Hericy (FR)
(74) Mandataire: Ilgart, Jean-Christophe
(86) Numéro de dépôt international: PCT/EP2010/052417
(87) Numéro de publication internationale: WO 2010/097438

(56) Documents cités:
- WO-A2-2010/086338
- FR-A- 1 596 504
- FR-A- 2 126 109
- FR-A- 2 911 930
- US-A- 2 143 024
- US-A1- 2006 097 103

## Description

La présente invention se rapporte au domaine des turboréacteurs à double flux, de préférence pour aéronef.

De manière conventionnelle et tel que cela est décrit notamment dans les documents WO 2010/086338 et US 2006/097103, un tel turboréacteur comprend une pluralité d'aubes de soufflante, et un disque de support des aubes capable d'être mis en rotation par rapport à une partie stator de soufflante, selon un axe longitudinal de soufflante.

Les aubes de soufflante sont généralement montées fixement sur le disque de support, avec une incidence prédéterminée qui est identique pour chacune d'elles. Cette solution se révèle relativement satisfaisante lorsque la soufflante est alimentée en air de manière sensiblement homogène.

Néanmoins, certaines conceptions de turboréacteur peuvent avoir pour conséquence une alimentation hétérogène de la soufflante en air, et ce en permanence durant le fonctionnement du turboréacteur. Cela est notamment le cas lorsque le carénage aérodynamique délimitant l'entrée d'air du turboréacteur masque une partie de l'ensemble d'aubes de cette soufflante, dans la direction de l'axe longitudinal de soufflante. A titre indicatif, ces configurations sont dites « à turboréacteurs partiellement enterrés », et contrastent avec les solutions classiques dans lesquelles le carénage aérodynamique délimitant l'entrée d'air chemine tout le long du carter extérieur fixe de la soufflante, sans masquer les aubes de celle-ci.

Pour faire face aux cas où la soufflante est alimentée en air de manière hétérogène, occasionnellement ou en permanence, l'invention prévoit une partie soufflante de turboréacteur à double flux comprenant les caractéristiques de la revendication 1.

En d'autres termes, l'invention prévoit que les aubes passent successivement à une position angulaire quelconque de la partie stator avec la même incidence, qui suit une loi de calage évolutive au cours d'un tour entier de soufflante selon son axe longitudinal.

Ce calage cyclique permet de répondre de manière extrêmement satisfaisante aux cas d'alimentation en air hétérogène de la soufflante, permanente ou occasionnelle. Dans ce dernier cas, se produisant par exemple lors de variations d'incidence de l'aéronef ou lors de virages, la variation d'incidence des aubes de soufflante n'est pas permanente, mais activée automatiquement ou manuellement uniquement lorsque les circonstances de vol traduisent une alimentation en air hétérogène de la soufflante. Ce cas de figure est donc préférentiellement rencontré avec les solutions classiques dans lesquelles le carénage aérodynamique délimitant l'entrée d'air chemine tout le long du carter extérieur fixe de la soufflante, sans masquer les aubes de celle-ci.

En revanche, lorsque l'alimentation en air de la soufflante est hétérogène en permanence, la variation d'incidence des aubes de soufflante est elle aussi activée en permanence. Il s'agit par exemple, comme mentionné ci-dessus, des cas où le turboréacteur est partiellement enterré dans la structure de l'aéronef, de préférence dans l'aile principale.

Ainsi, dans ce cas préféré d'un turboréacteur partiellement enterré, la loi de calage unique est préférentiellement prévue pour faire en sorte que lorsqu'une aube de soufflante quelconque entre dans la zone masquée, également dite enterrée, son incidence soit diminuée de manière à ce qu'elle réclame moins d'air, réduisant ainsi les risques de pompage et de chute de rendement. En revanche, lorsqu'elle sort de cette zone masquée, son incidence normale est rétablie sans aucun risque, puisqu'elle se retrouve dans le flux d'air. Naturellement, des lois de calage beaucoup plus complexes sont envisageables, et déterminables en fonction des contraintes et besoins rencontrés.

Enfin, toujours selon l'invention, ledit système de calage en incidence est piloté de manière passive par la rotation du disque de support des aubes par rapport à la partie stator de soufflante, selon ledit axe longitudinal de soufflante. La nature passive traduit ici le fait qu'aucune source d'énergie additionnelle autre que celle de la rotation de la soufflante n'est employée. Selon un premier mode de réalisation préféré de l'invention, le système de calage en incidence piloté de manière passive comprend un ergot agencé de manière excentrée sur le pied de l'aube concernée, une première roue dentée centrée sur ledit axe longitudinal de soufflante et fixée à la partie stator de soufflante, ainsi qu'une seconde roue dentée entraînée en rotation selon l'axe longitudinal de soufflante par le disque de support, et montée libre en rotation sur ce dernier selon un axe de rotation de roue distinct dudit axe longitudinal de soufflante, ladite seconde roue dentée engrenant avec ladite première roue dentée et étant reliée mécaniquement audit ergot.

Avec cette conception spécifique, il est préférentiellement prévu que les systèmes de calage en incidence de toutes les aubes de la soufflante partagent la même première roue dentée. Il en résulte un gain important en termes de masse et d'encombrement.

De préférence, ladite seconde roue dentée est reliée mécaniquement audit ergot par l'intermédiaire d'une biellette.

Toujours de manière préférentielle, il est fait en sorte que les première et seconde roues dentées forment un engrenage conique, à savoir qu'ils adoptent des formes tronconiques dont les axes se coupent, de préférence de façon orthogonale.

Selon un second mode de réalisation préféré de l'invention, ledit système de calage en incidence comprend un ergot monté fixement de manière excentrée sur le pied de l'aube concernée, ainsi qu'une piste de guidage fixe par rapport à la partie stator de soufflante et agencée autour dudit axe longitudinal de soufflante, ladite piste de guidage présentant une géométrie permettant d'appliquer audit ergot, durant son mouvement rotatif par rapport à la partie stator selon l'axe longitudinal, un déplacement additionnel parallèle à ce même axe, assurant une variation de l'incidence de l'aube selon ladite loi de calage.

Ici aussi, il est donc prévu que les aubes passent successivement à une position angulaire quelconque de la partie stator avec la même incidence, qui suit une loi de calage évolutive au cours d'un tour entier de soufflante selon son axe longitudinal.

Ce calage cyclique permet de répondre de manière extrêmement satisfaisante aux cas dans lesquels l'alimentation en air de la soufflante est hétérogène en permanence, étant donné que la variation d'incidence des aubes de soufflante est elle aussi obtenue en permanence, grâce à la coopération entre l'ergot et sa piste de guidage présentant une géométrie adéquate. Il s'agit par exemple, comme mentionné ci-dessus, des cas où le turboréacteur est partiellement enterré dans la structure de l'aéronef, de préférence dans l'aile principale.

Ainsi, dans ce cas préféré d'un turboréacteur partiellement enterré, la loi de calage unique est préférentiellement prévue pour faire en sorte que lorsqu'une aube de soufflante quelconque entre dans la zone masquée, également dite enterrée, son incidence soit diminuée de manière à ce qu'elle réclame moins d'air, réduisant ainsi les risques de pompage et de chute de rendement. En revanche, lorsqu'elle sort de cette zone masquée, son incidence normale est rétablie sans aucun risque, puisqu'elle se retrouve dans le flux d'air. Naturellement, des lois de calage beaucoup plus complexes sont envisageables, et déterminables en fonction des contraintes et besoins rencontrés.

Comme cela ressort de ce qui précède, ledit système de calage en incidence est piloté de manière passive par la rotation du disque de support des aubes par rapport à la partie stator de soufflante, selon ledit axe longitudinal de soufflante. La nature passive traduit ici le fait qu'aucune source d'énergie additionnelle autre que celle de la rotation de la soufflante n'est employée. En effet, la rotation de la soufflante a pour effet d'appliquer à l'ergot d'une aube donnée un mouvement rotatif par rapport à la partie stator, selon l'axe longitudinal. Durant ce mouvement rotatif, l'ergot suit la piste de guidage, dont la géométrie spécifique a pour conséquence d'appliquer à cet ergot un déplacement additionnel parallèle à l'axe longitudinal, assurant la variation souhaitée de l'incidence de l'aube. En d'autres termes, la piste de guidage a pour fonction de transformer le déplacement rotatif de l'ergot en un déplacement axial de ce dernier, par rapport à la partie stator.

Avec cette conception spécifique, il est préférentiellement prévu que les systèmes de calage en incidence de toutes les aubes de la soufflante partagent la même piste de guidage. Il pourrait néanmoins en être autrement, sans sortir du cadre de l'invention.

De préférence, ledit système de calage en incidence comporte en outre un galet solidaire dudit ergot, logé à coulissement dans ladite piste de guidage. Alternativement, l'ergot pourrait être lui-même logé directement dans la piste de guidage, sans sortir du cadre de l'invention.

De préférence, ladite piste de guidage prend la forme d'une rainure ouverte radialement vers l'extérieur. Sa forme est alors sensiblement annulaire centrée sur l'axe longitudinal de soufflante, tout en présentant une évolution de sa position dans la direction axiale/longitudinale afin d'appliquer ladite loi de calage désirée.

Quel que soit le mode de réalisation envisagé, de préférence, ledit nombre entier n définissant la période de la loi de calage est égal à 1, ce qui traduit une période égale à un tour.

L'invention concerne également un turboréacteur comprenant une partie soufflante telle que décrite ci-dessus.

De préférence, le turboréacteur est prévu pour être partiellement enterré, à savoir qu'il comprend un carénage aérodynamique délimitant l'entrée d'air du turboréacteur et masquant, lorsqu'il est vu selon la direction de l'axe longitudinal de soufflante, une partie de l'ensemble d'aubes de cette soufflante. En d'autres termes, dans ce cas de figure, la surface en section transversale de l'entrée d'air est inférieure à une surface en forme de disque de diamètre correspondant à celui de la partie rotative de la soufflante, le rapport entre ces deux surfaces pouvant être de l'ordre de 0,33.

D'autres avantages et caractéristiques de l'invention apparaîtront dans la description détaillée non limitative ci-dessous.

Cette description sera faite au regard des dessins annexés parmi lesquels ;
- la figure 1 représente une vue en demi-coupe longitudinale d'une portion avant d'un turboréacteur selon un premier mode de réalisation préféré de la présente invention ;
- la figure 2 représente une vue de face du turboréacteur montré sur la figure 1 ;
- les figures 3a à 3d représentent un système de calage en incidence de l'une des aubes de soufflante du turboréacteur montré sur les figures 1 et 2, dans différentes configurations adoptées au cours d'un tour de ladite aube concernée ;
- la figure 4 représente un graphe schématisant la loi de calage appliquée à ladite aube ;
- la figure 5 représente une vue en demi-coupe longitudinale d'une portion avant d'un turboréacteur selon un second mode de réalisation préféré de la présente invention ;
- la figure 6 représente une vue partielle en perspective d'une partie du système de calage en incidence montré sur la figure 5 ; et
- la figure 7 représente un système de calage en incidence de l'une des aubes de soufflante du turboréacteur montré sur la figure 5, dans différentes configurations adoptées au cours d'un tour de ladite aube concernée.

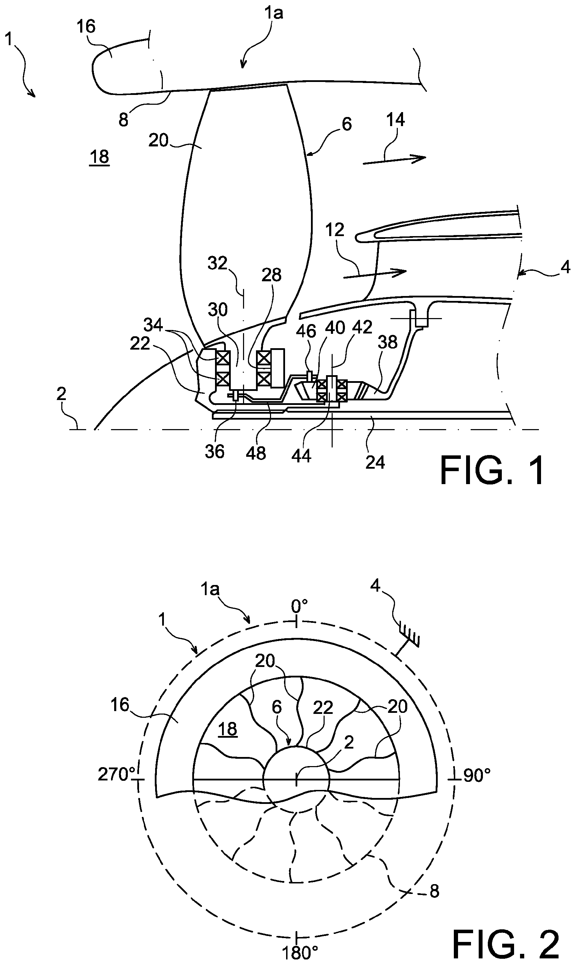

En référence à la figure 1, on peut apercevoir une portion avant d'un turboréacteur 1 selon un premier mode de réalisation préféré de la présente invention. Cette partie avant est essentiellement composée d'une partie soufflante la, centrée sur un axe longitudinal 2 correspondant également à l'axe du turboréacteur. Elle comprend globalement une partie stator 4, ainsi qu'une partie 6 mobile en rotation autour de cette partie stator, selon l'axe 2. La partie stator 4 est fixe et comprend entre autres un carter extérieur fixe de soufflante 8, solidaire d'un carter intermédiaire permettant d'assurer la délimitation entre le flux primaire 12 et le flux secondaire 14 du turboréacteur. En outre, ce carter extérieur fixe de soufflante 8 porte vers l'avant un carénage aérodynamique 16 délimitant l'entrée d'air 18 du turboréacteur.

La partie rotative 6 comprend quant à elle une pluralité d'aubes de soufflante 20, dont une seule est visible sur la figure 1, ainsi qu'un disque de support des aubes 22 centré sur l'axe 2. A titre d'exemple indicatif, la mise en rotation de la partie mobile 6 est assurée à l'aide d'une arbre rotatif d'entraînement 24 centré sur l'axe 2, et engrenant directement ou par l'intermédiaire d'une boîte d'engrenages avec ledit support 22, également dénommé moyeu. Ce dernier présente une pluralité d'orifices 28 espacés circonférentiellement les uns des autres, chacun dédié au logement de l'une des aubes de soufflante 20.

Ainsi, comme cela est représenté pour l'une des aubes 20 sur la figure 1, l'orifice 28 reçoit le pied 30 de l'aube de manière à autoriser une rotation de celle-ci selon un axe de pivotement d'aube 32, de préférence sensiblement radial. Cela est notamment permis par la mise en place de paliers de roulements 34 entre l'orifice 28 et le pied d'aube 30.

Ce montage rotatif de l'aube 20 par rapport au moyeu 22 selon l'axe 32 est prévu pour pouvoir piloter cette aube en incidence, grâce à un système de calage en incidence qui va maintenant être décrit, et qui est de préférence sensiblement identique pour chacune des aubes.

Il incorpore tout d'abord un ergot 36 agencé sur le pied d'aube 30 de manière excentrée par rapport à l'axe de pivotement 32, et faisant saillie radialement vers l'intérieur.

Par ailleurs, il est prévu une première roue dentée 38 centrée sur l'axe longitudinal 2 de la soufflante, et fixée à la partie stator 4. De préférence, cette roue 38, qui prend une forme sensiblement tronconique, est partagée par tous les systèmes de calage équipant les aubes de la soufflante.

Le système de calage en incidence incorpore également une seconde roue dentée 40 entraînée en rotation selon l'axe 2 par le disque de support 22, et montée libre en rotation sur ce dernier selon un axe de rotation de roue 42, sécant et de préférence orthogonal à l'axe 2. Un ergot 44 est par exemple prévu sur le moyeu 42 pour permettre le montage libre en rotation de la seconde roue 42 de forme sensiblement tronconique, qui engrène directement ou indirectement avec la première roue dentée 38. A cet égard, il est de préférence prévu un rapport de réduction de 1 entre les deux roues, de manière à ce qu'un tour de moyeu 22 autour de l'axe 2 engendre un tour de la seconde roue 40 autour de son axe 42.

De plus, la seconde roue 40 porte également fixement un ergot 46, excentré vis-à-vis de l'axe de rotation 42 et faisant saillie radialement, et relié à l'ergot 36 par une biellette 48.

Ce système est piloté de manière passive, puisque la rotation de la partie mobile 6 de la soufflante a pour conséquence de faire engrener la seconde roue mobile 40 avec la première roue fixe 38, et donc de la faire tourner autour de son axe de rotation 42, provoquant une mise en mouvement de la biellette 48 actionnant l'ergot excentré 36 du pied d'aube 30.

Ce système de calage en incidence est spécifiquement conçu pour que l'aube 20 à laquelle il est associé ait une incidence variant selon une loi de calage cyclique, de préférence de période correspondant à un tour de soufflante. Cette loi de calage, qui donne l'incidence de l'aube en fonction de sa position angulaire par rapport à la partie stator 4 selon l'axe 2, est la même pour toutes des aubes 20 de la soufflante. Elle est déterminée en fonction des besoins rencontrés. Dans l'exemple montré sur la figure 2, le turboréacteur 1 est destiné à être semi-enterré dans la structure de l'aéronef, de préférence dans l'aile principale. Ainsi, en vue de face telle que visible sur cette figure 2, le carénage aérodynamique 16 délimitant l'entrée d'air 18 masque la moitié inférieure de l'ensemble d'aubes 20.

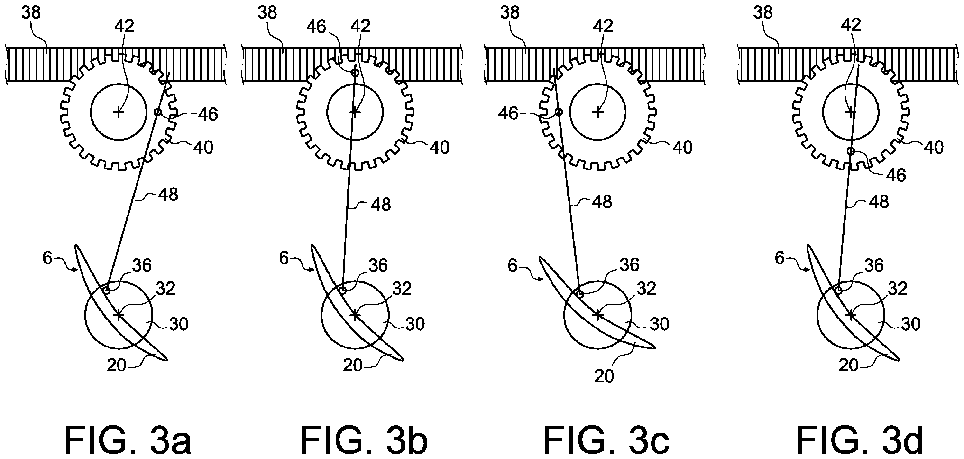

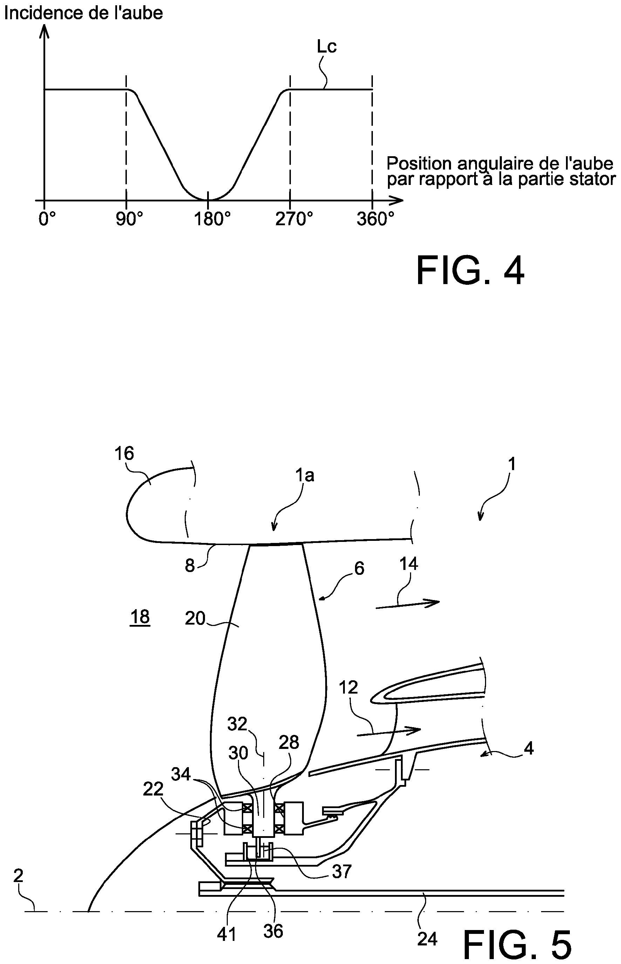

Dans cette situation, la loi de calage unique Lc schématisée sur la figure 4 est préférentiellement prévue pour faire en sorte que lorsqu'une aube quelconque 20 se trouve dans une position angulaire de 0° par rapport à la partie stator 4, elle présente une incidence dite normale, qui est conservée jusqu'à ce qu'elle occupe une position angulaire proche de 90°. Les figures 3a et 3b représentent respectivement l'état du système de calage pour les deux positions angulaires de 0° et 90° de l'aube. Sur ces deux figures, on peut en effet apercevoir que si la configuration du système de calage a été modifiée du fait de l'engrènement des deux roues 38, 40 sur un quart de tour, l'incidence de l'aube reste elle invariable sur cette portion de cycle.

A partir de la position angulaire de 90° et jusqu'à sa position angulaire de 180°, correspondant à 6h, l'aube 20 voit son incidence diminuer, de préférence jusqu'à une valeur nulle ou presque nulle. Durant cette portion du cycle, l'aube en question traverse effectivement la partie masquée / enterrée, et il est donc fait en sorte qu'elle réclame moins d'air afin de réduire les risques de pompage et de chute de rendement. A l'inverse, à partir de la position angulaire de 180° et jusqu'à sa position angulaire de 270° coïncidant avec la sortie de la partie masquée / enterrée de la soufflante, l'aube 20 voit son incidence augmenter jusqu'à atteindre à nouveau sa valeur dite normale, qu'elle conserve ensuite jusqu'à sa position angulaire de 0°, correspondant également à 360°. A cet égard, les figures 3c et 3d représentent respectivement l'état du système de calage pour les deux positions angulaires de 180° et 270° de l'aube.

Pour obtenir la loi de calage Lc voulue, il est ici fait en sorte, comme cela est visible sur les figures 3a à 3d, que l'ergot 46 soit monté coulissant sur la biellette 48, le long de celle-ci.

Naturellement, la loi de calage unique Lc appliquée à toutes les aubes de soufflante 20 pourrait différer, mais avec une même configuration d'entrée d'air 18, sans sortir du cadre de l'invention.

En référence à présent à la figure 5, on peut apercevoir une portion avant d'un turboréacteur 1 selon un second mode de réalisation préféré de la présente invention. Ce second mode présente des similitudes avec le premier mode décrit ci-dessus. D'ailleurs, sur les figures, les éléments portant des références numériques identiques correspondent à des éléments identiques ou similaires.

Ici encore, la partie avant est essentiellement composée d'une partie soufflante la, centrée sur un axe longitudinal 2 correspondant également à l'axe du turboréacteur. Elle comprend globalement une partie stator 4, ainsi qu'une partie 6 mobile en rotation autour de cette partie stator, selon l'axe 2. La partie stator 4 est fixe et comprend entre autres un carter extérieur fixe de soufflante 8, solidaire d'un carter intermédiaire permettant d'assurer la délimitation entre le flux primaire 12 et le flux secondaire 14 du turboréacteur. En outre, ce carter extérieur fixe de soufflante 8 porte vers l'avant un carénage aérodynamique 16 délimitant l'entrée d'air 18 du turboréacteur.

La partie rotative 6 comprend quant à elle une pluralité d'aubes de soufflante 20, dont une seule est visible sur la figure 5, ainsi qu'un disque de support des aubes 22 centré sur l'axe 2. A titre d'exemple indicatif, la mise en rotation de la partie mobile 6 est assurée à l'aide d'une arbre rotatif d'entraînement 24 centré sur l'axe 2, et engrenant directement ou par l'intermédiaire d'une boîte d'engrenages avec ledit support 22, également dénommé moyeu. Ce dernier présente une pluralité d'orifices 28 espacés circonférentiellement les uns des autres, chacun dédié au logement de l'une des aubes de soufflante 20.

Ainsi, comme cela est représenté pour l'une des aubes 20 sur la figure 5, l'orifice 28 reçoit le pied 30 de l'aube de manière à autoriser une rotation de celle-ci selon un axe de pivotement d'aube 32, de préférence sensiblement radial. Cela est notamment permis par la mise en place de paliers de roulements 34 entre l'orifice 28 et le pied d'aube 30.

Ce montage rotatif de l'aube 20 par rapport au moyeu 22 selon l'axe 32 est prévu pour pouvoir piloter cette aube en incidence, grâce à un système de calage en incidence qui va maintenant être décrit, et qui est de préférence sensiblement identique pour chacune des aubes.

Il incorpore tout d'abord un ergot 36 monté fixement sur le pied d'aube 30, de manière excentrée par rapport à l'axe de pivotement 32, et faisant saillie radialement vers l'intérieur. Son extrémité radiale externe est donc solidaire du pied 30, tandis que son extrémité radiale interne porte préférentiellement un galet 37.

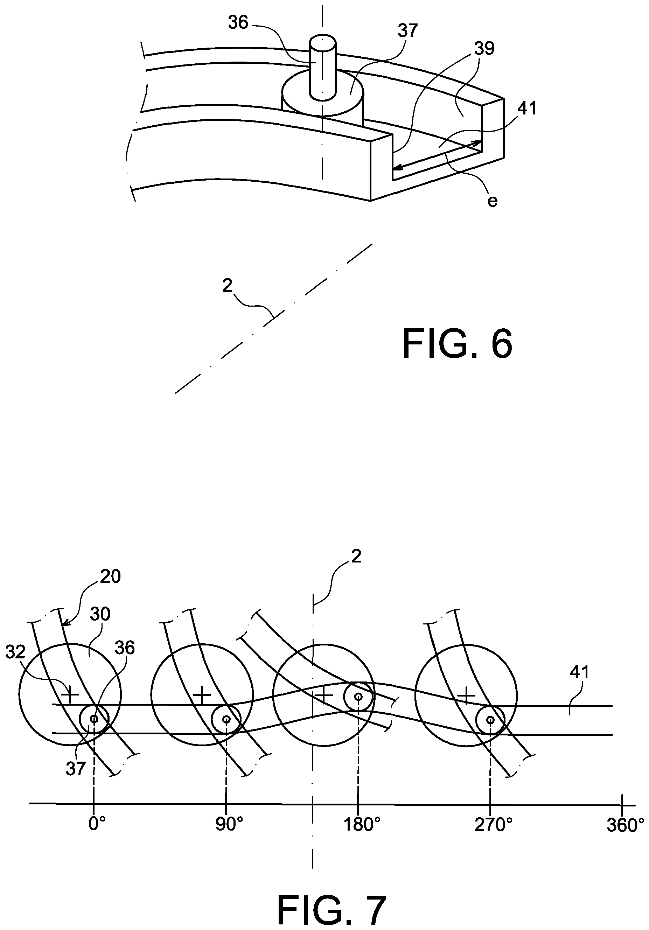

Par ailleurs, il est prévu une piste de guidage 41 fixe par rapport à la partie stator 4, cette piste cheminant autour de l'axe longitudinal de soufflante 2. Plus précisément, la piste de guidage 41, logeant le galet suiveur 37, est une piste suivant une ligne fermée, et adopte préférentiellement la forme d'une rainure centrée sur l'axe 2 et ouverte radialement vers l'extérieur. Cela est notamment visible sur la figure 6 montrant une partie de cette piste 41, qui est délimitée axialement vers l'aval et vers l'amont respectivement par deux flancs 39 sensiblement annulaires, dont l'écartement constant « e » est sensiblement identique au diamètre du galet 37. Ainsi, dans le second mode de réalisation préféré représenté, la piste 41 se trouve agencée radialement vers l'intérieur par rapport au pied d'aube 30, afin que le galet 37 puisse se loger entre les deux flancs 39 servant à son guidage.

De préférence, cette piste 41 est partagée par tous les systèmes de calage équipant les aubes de la soufflante, à savoir qu'elle loge une pluralité de galets 37 chacun associé à l'ergot 36 d'une aube donnée.

L'une des particularités du mode de réalisation préféré réside dans le fait que la piste de guidage 41 présente une géométrie permettant d'appliquer à l'ergot 36, durant son mouvement rotatif par rapport à la partie stator 4, un déplacement additionnel parallèle à l'axe 2, assurant une variation de l'incidence de l'aube. Ainsi, ce système est piloté de manière passive, puisque la rotation de la partie mobile 6 de la soufflante a pour conséquence de faire cheminer le galet 37 le long de la piste 41, et de provoquer ainsi le déplacement additionnel de l'ergot 36 selon la direction de l'axe 2. Pour ce faire, la piste 41 s'étend dans la direction annulaire autour de l'axe 2, mais également dans la direction de cet axe afin d'obtenir l'évolution du calage souhaitée.

Le système de calage en incidence est spécifiquement conçu pour que l'aube 20 à laquelle il est associé ait une incidence variant selon une loi de calage cyclique, de préférence de période correspondant à un tour de soufflante. Cette loi de calage, qui donne l'incidence de l'aube en fonction de sa position angulaire par rapport à la partie stator 4 selon l'axe 2, est la même pour toutes des aubes 20 de la soufflante. Elle est déterminée en fonction des besoins rencontrés. Toujours dans l'exemple montré sur la figure 2, le turboréacteur 1 est destiné à être semi-enterré dans la structure de l'aéronef, de préférence dans l'aile principale. Ainsi, en vue de face telle que visible sur cette figure 2, le carénage aérodynamique 16 délimitant l'entrée d'air 18 masque la moitié inférieure de l'ensemble d'aubes 20.

Dans cette situation, la loi de calage unique Lc schématisée sur la figure 4 est préférentiellement prévue pour faire en sorte que lorsqu'une aube quelconque 20 se trouve dans une position angulaire de 0° par rapport à la partie stator 4, elle présente une incidence dite normale, qui est conservée jusqu'à ce qu'elle occupe une position angulaire proche de 90°. Les deux représentations de gauche sur la figure 7 représentent respectivement l'état du système de calage pour les deux positions angulaires de 0° et 90° de l'aube. Sur cette figure, pour faciliter la compréhension, la piste de guidage 41 a été représentée de manière développée dans le plan, alors qu'il est rappelé que celle-ci présente une forme globalement annulaire.

On peut apercevoir qu'entre ces deux premières positions, la piste 41 ne présente aucune évolution dans la direction axiale, de sorte que l'incidence de l'aube n'est pas modifiée au cours de ce premier quart de tour.

A partir de la position angulaire de 90° et jusqu'à sa position angulaire de 180°, correspondant à 6h, l'aube 20 voit son incidence diminuer, de préférence jusqu'à une valeur nulle ou presque nulle. Durant cette portion du cycle, l'aube en question traverse effectivement la partie masquée / enterrée, et il est donc fait en sorte qu'elle réclame moins d'air afin de réduire les risques de pompage et de chute de rendement. A l'inverse, à partir de la position angulaire de 180° et jusqu'à sa position angulaire de 270° coïncidant avec la sortie de la partie masquée / enterrée de la soufflante, l'aube 20 voit son incidence augmenter jusqu'à atteindre à nouveau sa valeur dite normale, qu'elle conserve ensuite jusqu'à sa position angulaire de 0°, correspondant également à 360°. A cet égard, les deux représentations de droite sur la figure 3 représentent respectivement l'état du système de calage pour les deux positions angulaires de 180° et 270° de l'aube.

Ainsi, on peut voir qu'entre les positions 90° et 180°, la piste 41 se décale progressivement vers l'aval dans la direction de l'axe 2, assurant le déplacement additionnel de l'ergot 36 dans cette même direction. Par conséquent, au cours de ce quart de tour, l'aube voit en effet son calage évoluer en se fermant progressivement. En revanche, on peut voir qu'entre les positions 180° et 270°, la piste 41 se décale progressivement vers l'amont dans la direction de l'axe 2, assurant le déplacement additionnel de l'ergot 36 dans cette même direction. Par conséquent, au cours de ce quart de tour, l'aube voit son calage évoluer, en se ré-ouvrant à nouveau jusqu'à sa position d'incidence normale.

Enfin, on peut apercevoir qu'entre les positions 270° et 360°, la piste 41 ne présente aucune évolution dans la direction axiale, de sorte que l'incidence de l'aube n'est pas modifiée au cours de ce dernier quart de tour.

Naturellement, la loi de calage unique Lc appliquée à toutes les aubes de soufflante 20 pourrait différer, mais avec une même configuration d'entrée d'air 18, sans sortir du cadre de l'invention.

## Revendications

1. Partie soufflante (1a) de turboréacteur à double flux comprenant une pluralité d'aubes de soufflante (20), un disque (22) de support des aubes capable d'être mis en rotation par rapport à une partie stator (4) de soufflante, selon un axe longitudinal (2) de soufflante, un système de calage en incidence étant associé à chaque aube de soufflante (20), ces systèmes étant conçus de telle sorte que l'incidence de chaque aube varie selon une même loi de calage (Lc) fonction de la position angulaire de l'aube (20) par rapport à la partie stator (4), selon ledit axe longitudinal (2) de soufflante, ladite même loi de calage étant périodique de période P = 360°/n, avec n correspondant à un nombre entier supérieur ou égal à 1, **caractérisée en ce que** ledit système de calage en incidence est piloté de manière passive par la rotation du disque (22) de support des aubes (20) par rapport à la partie stator de soufflante (4), selon ledit axe longitudinal de soufflante (2).

2. Partie soufflante selon la revendication 1, **caractérisée en ce que** ledit système de calage en incidence comprend un ergot (36) agencé de manière excentrée sur le pied (30) de l'aube concernée, une première roue dentée (38) centrée sur ledit axe longitudinal de soufflante (2) et fixée à la partie stator (4) de soufflante, ainsi qu'une seconde roue dentée (40) entraînée en rotation selon l'axe longitudinal de soufflante (2) par le disque de support (22), et montée libre en rotation sur ce dernier selon un axe de rotation de roue (42) distinct dudit axe longitudinal de soufflante (2), ladite seconde roue dentée (40) engrenant avec ladite première roue dentée (38) et étant reliée mécaniquement audit ergot (36).

3. Partie soufflante selon la revendication 2, **caractérisée en ce que** les systèmes de calage en incidence de toutes les aubes (20) de la soufflante partagent la même première roue dentée (38).

4. Partie soufflante selon la revendication 2 ou la revendication 3, **caractérisée en ce que** ladite seconde roue dentée (40) est reliée mécaniquement audit ergot par l'intermédiaire d'une biellette (48).

5. Partie soufflante selon l'une quelconque des revendications 2 à 4, **caractérisée en ce que** les première et seconde roues dentées (38, 40) forment un engrenage conique.

6. Partie soufflante selon la revendication 1, **caractérisée en ce que** ledit système de calage en incidence comprend un ergot (36) monté fixement de manière excentrée sur le pied (30) de l'aube concernée, ainsi qu'une piste de guidage (41) fixe par rapport à la partie stator (4) de soufflante et agencée autour dudit axe longitudinal de soufflante (2), ladite piste de guidage présentant une géométrie permettant d'appliquer audit ergot (36), durant son mouvement rotatif par rapport à la partie stator (4) selon l'axe longitudinal (2), un déplacement additionnel parallèle à ce même axe, assurant une variation de l'incidence de l'aube selon ladite loi de calage (Lc).

7. Partie soufflante selon la revendication 6, **caractérisée en ce que** ledit système de calage en incidence comporte en outre un galet (37) solidaire dudit ergot (36), logé à coulissement dans ladite piste de guidage (41).

8. Partie soufflante selon la revendication 6 ou la revendication 7, **caractérisée en ce que** ladite piste de guidage (38) prend la forme d'une rainure ouverte radialement vers l'extérieur.

9. Partie soufflante selon l'une quelconque des revendications 6 à 8, **caractérisée en ce que** les systèmes de calage en incidence de toutes les aubes (20) de la soufflante partagent la même piste de guidage (41).

10. Partie soufflante selon l'une quelconque des revendications précédentes, **caractérisée en ce que** ledit nombre entier n est égal à 1.

11. Turboréacteur (1) **caractérisé en ce qu'**il comprend une partie soufflante (1a) selon l'une quelconque des revendications précédentes.

12. Turboréacteur selon la revendication 11, **caractérisé en ce qu'**il comprend un carénage aérodynamique (16) délimitant l'entrée d'air (18) du turboréacteur et masquant, lorsqu'il est vu selon la direction de l'axe longitudinal de soufflante (2), une partie de l'ensemble d'aubes (20) de cette soufflante.

## Patentansprüche

1. Gebläseteil (1a) von Mantelstrom-Turbotriebwerken mit einer Vielzahl von Gebläseschaufeln (20), einer Trägerscheibe (22) der Schaufeln, die geeignet ist, gegenüber einem Gebläse-Statorteil (4) in Rotation um eine Längsachse (2) des Gebläses versetzt zu werden, einem Anstellwinkel-Einstellsystem, das mit jeder Gebläseschaufel (20) verbunden ist, wobei diese Systeme dergestalt ausgeführt sind, dass der Anstellwinkel jeder Schaufel gemäß einer gleichen Einstellregel (Lc) in Abhängigkeit von der Winkelposition der Schaufel (20) zu dem Statorteil (4) um die genannte Längsachse (2) des Gebläses variiert, wobei die genannte gleiche Einstellregel periodisch mit der Periode P = 360° /n ist, worin n einer ganzen Zahl von höher als oder gleich 1 entspricht,
**dadurch gekennzeichnet,**
**dass** das genannte Anstellwinkel-Einstellsystem durch die Rotation der Trägerscheibe (22) der Schaufeln (20) gegenüber dem Gebläse-Statorteil (4) um die genannte Längsachse (2) des Gebläses passiv gesteuert wird.

2. Gebläseteil nach Anspruch 1,
**dadurch gekennzeichnet,**
**dass** dieses Anstellwinkel-Einstellsystem einen Zapfen (36) aufweist, der außermittig auf dem Fuß (30) der betreffenden Schaufel angebracht ist, ein erstes Zahnrad (38) aufweist, das auf der genannten Längsachse (2) des Gebläses zentriert und an dem Statorteil (4) des Gebläses befestigt ist, sowie ein zweites Zahnrad (40) aufweist, das durch die Trägerscheibe (22) in Rotation um die genannte Längsachse (2) des Gebläses versetzt wird und auf dieser Trägerscheibe drehfrei um eine Rad-Drehachse (42), die sich von der genannten Längsachse (2) des Gebläses unterscheidet, eingebaut ist, wobei sich dieses zweite Zahnrad (40) mit dem genannten ersten Zahnrad (38) in Eingriff befindet und mit diesem Zapfen (36) mechanisch verbunden ist.

3. Gebläseteil nach Anspruch 2,
**dadurch gekennzeichnet,**
**dass** sich die Anstellwinkel-Einstellsysteme aller Schaufeln (20) des Gebläses dasselbe erste Zahnrad (38) teilen.

4. Gebläseteil nach Anspruch 2 oder Anspruch 3,
**dadurch gekennzeichnet,**
**dass** das genannte zweite Zahnrad (40) über einen Schwingarm (48) mechanisch mit dem genannten Zapfen verbunden ist.

5. Gebläseteil nach einem der Ansprüche 2 bis 4,
**dadurch gekennzeichnet,**
**dass** das erste und das zweite Zahnrad (38, 40) ein Winkelgetriebe bilden.

6. Gebläseteil nach Anspruch 1,
**dadurch gekennzeichnet,**
**dass** das genannte Anstellwinkel-Einstellsystem einen Zapfen (36) aufweist, der auf dem Fuß (30) der betreffenden Schaufel außermittig fest eingebaut ist, sowie eine Führungsbahn (41) aufweist, die gegenüber dem Statorteil (4) des Gebläses feststehend ist und um die genannte Längsachse (2) des Gebläses herum angeordnet ist, wobei diese Führungsbahn eine Geometrie aufweist, die es ermöglicht, den genannten Zapfen (36) während seiner Rotationsbewegung gegenüber dem Statorteil (4) um die Längsachse (2) in eine zusätzliche Vorschubbewegung parallel zu dieser Achse zu bringen, wodurch eine Veränderung des Anstellwinkels der Schaufel gemäß der genannten Einstellregel (Lc) gewährleistet wird.

7. Gebläseteil nach Anspruch 6,
**dadurch gekennzeichnet,**
**dass** das genannte Anstellwinkel-Einstellsystem ferner eine mit dem genannten Zapfen (36) fest verbundene Zapfenrolle (37) aufweist, die in der genannten Führungsbahn (41) gleitend aufgenommen ist.

8. Gebläseteil nach Anspruch 6 oder Anspruch 7,
**dadurch gekennzeichnet,**
**dass** die genannte Führungsbahn (41) die Form einer radial nach außen offenen Rinne hat.

9. Gebläseteil nach einem der Ansprüche 6 bis 8,
**dadurch gekennzeichnet,**
**dass** sich die Anstellwinkel-Einstellsysteme aller Schaufeln (20) des Gebläses dieselbe Führungsbahn (41) teilen.

10. Gebläseteil nach einem der vorherigen Ansprüche,
**dadurch gekennzeichnet,**
**dass** die genannte ganze Zahl n gleich 1 ist.

11. Turbotriebwerk (1),
**dadurch gekennzeichnet,**
**dass** es ein Gebläseteil (1a) nach einem der vorherigen Ansprüche aufweist.

12. Turbotriebwerk nach Anspruch 11,
**dadurch gekennzeichnet,**
**dass** es eine stromlinienförmige Verkleidung (16) aufweist, die den Lufteinlass (18) des Turbotriebwerks umgrenzt und, in der Richtung der Gebläse-Längsachse (2) betrachtet, einen Teil der Gesamtanordnung der Schaufeln (20) dieses Gebläses verdeckt.

## Claims

1. A dual flow turbojet engine fan portion (1a) comprising a plurality of fan blades (20), a disk (22) for supporting the blades capable of being rotated relative to a fan stator portion (4), along a longitudinal fan axis (2),
a system for setting angles of attack being associated with each fan blade (20), these systems being designed so that the angle of attack of each blade varies according to a same setting law (Lc) as a function of the angular position of the blade (20) relative to the stator portion (4), along said longitudinal fan axis (2), said same setting law being periodic with period P = 360°/n, with n corresponding to a whole number greater than or equal to 1,
**characterized in that** said system for setting angles of attack is steered passively by rotating the disk (22) supporting the blades (20) relative to the fan stator portion (4), along said longitudinal axis of the fan (2).

2. The fan portion according to claim 1, **characterized in that** said passively steered system for setting the angle of attack comprises a lug (36) arranged eccentrically on the foot (30) of the concerned blade, a first toothed wheel (38) centered on said longitudinal fan axis (2) and fastened to the fan stator portion (4), as well as a second toothed wheel (40) rotated along the longitudinal fan axis (2) by the support disk (22), and mounted freely rotating on the latter along a wheel axis of rotation (42) separate from said longitudinal fan axis (2), said second toothed wheel (40) meshing with said first toothed wheel (38) and being mechanically connected to said lug (36) .

3. The fan portion according to claim 2, **characterized in that** the systems for setting the angles of attack of all of the fan blades (20) share the same first toothed wheel (38).

4. The fan portion according to claim 3 or claim 2 or claim 3, **characterized in that** said second toothed wheel (40) is mechanically connected to said lug via a connecting rod (48).

5. The fan portion according to any one of claims 2 to 4, **characterized in that** the first and second toothed wheels (38, 40) form a conical gear.

6. The fan portion according to claim 1, **characterized in that** said system for setting the angle of attack comprises a lug (36) fixedly mounted eccentrically on the foot (30) of the concerned blade, as well as a guide path (41) fixed relative to the fan stator portion (4) and arranged around said longitudinal fan axis (2), said guide path having a geometry making it possible to apply to said lug (36), during its rotational movement relative to the stator portion (4) along the longitudinal axis (2), an additional movement parallel to said same axis, ensuring a variation of the angle of attack of the blade according to said setting law (Lc).

7. The fan portion according to claim 6, **characterized in that** said system for setting angles of attack also has a roller (37) secured to said lug (36), slidingly housed in said guide piece (41).

8. The fan portion according to claim 6 or claim 7, **characterized in that** said guide path (38) assumes the form of a groove radially outwardly open.

9. The fan portion according to any one of claims 6 to 8, **characterized in that** the systems for setting angles of attack for all of the blades (20) of the fan share the same guide path (41).

10. The fan portion according to any one of the preceding claims, **characterized in that** said whole number n is equal to 1.

11. A turbojet engine (1) **characterized in that** it comprises a fan portion (1a) according to any one of the preceding claims.

12. The turbojet engine according to claim 11, **characterized in that** it comprises an aerodynamic fairing (16) delimiting the air intake (18) of the turbojet engine and covering, when seen in the direction of the longitudinal fan axis (2), a portion of the set of blades (20) of said fan.
